# EUROPEAN PATENT SPECIFICATION

(11) **EP 0 761 420 B1**
(45) Date of publication and mention of the grant of the patent: **28.02.2001**
(21) Application number: 96306211.2
(22) Date of filing: 28.08.1996
(51) Int. Cl.: B29D 11/00

(54) **Apparatus and method for precision molding of plastic optical fiber connectors**
Vorrichtung und Verfahren zum Präzisionsformen von Kupplungen für optische Fasern aus Kunststoff
Dispositif et procédé pour le moulage à précision des connecteurs pour les fibres-optiques

(30) Priority: 07.09.1995 US 524552
(43) Date of publication of application: 12.03.1997
(73) Proprietor: AT&T Corp., New York, NY 10013-2412 (US)
(72) Inventor: Shahid, Muhammed Afzal, Ewing Township, New Jersey 08638 (US)
(74) Representative: Johnston, Kenneth Graham

(56) References cited:
- EP-A- 0 506 004
- EP-A- 0 514 923
- WO-A-93/21550
- US-A- 5 603 870
- PATENT ABSTRACTS OF JAPAN vol. 096, no. 004, 30 April 1996 & JP 07 325234 A (SUMITOMO ELECTRIC IND LTD;OTHERS: 02), 12 December 1995,

## Description

### Background of the Invention

### 1. Field of the Invention

The invention relates to optical fiber interconnections. More particularly, the invention relates to precision molding of devices and techniques for manufacturing plastic connectors for optical fibers.

### 2. Description of the Related Art

Current processes for producing multi-channel optical packages from silicon are often time consuming and expensive. Even for applications requiring multimode optical fiber, V-groove silicon chips are used in optical fiber interconnections. However, some silicon chips are expensive and are difficult to handle during polishing due to their brittle nature. Consequently, alternative technologies directed at low cost, mass production environments for multi-channel optical fiber interconnections are being sought.

It is known in the art to manufacture optical fiber connectors made of plastic using molding techniques. However, molded plastic connectors suffer generally from shrinkage during the molding processes. Therefore, to compensate for such molding induced shrinkage, conventional techniques use molds slightly and uniformly larger than the desired size of the plastic connector.

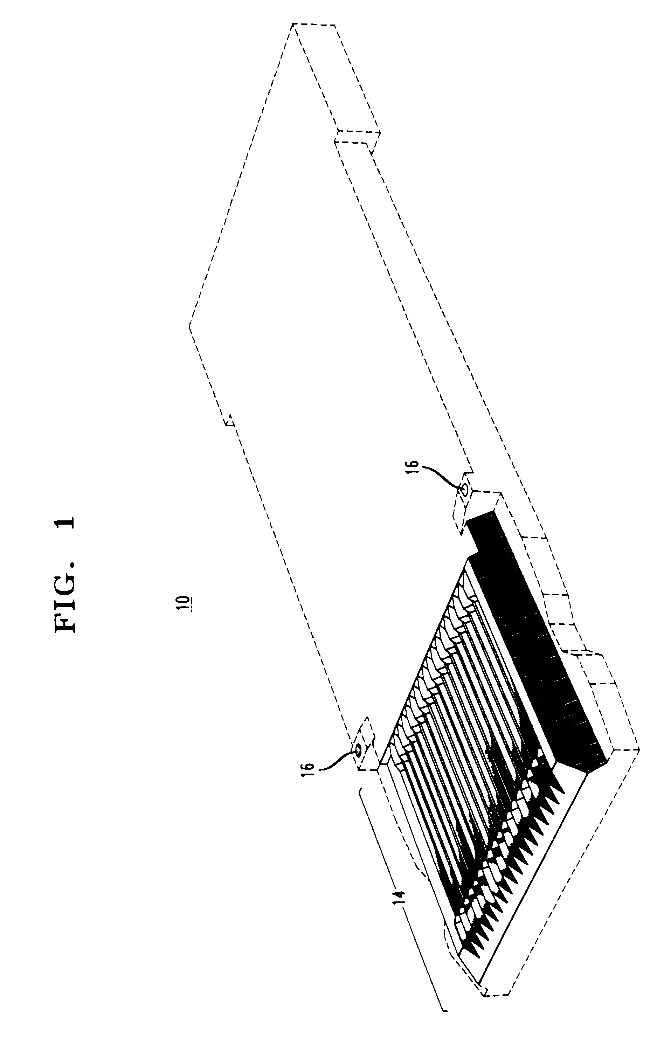

Referring now to FIG. 1, one component 10 of a two-component, optical fiber plastic connection assembly is shown. Plastic component 10 has a V-groove support member or submount (shown generally as 14) and means for alignment 16 with a second component, which is not shown. Both support member 14 and alignment means 16 are either formed separately and operably attached to component 10 or formed integrally therewith. In actual use, component 10 is aligned and combined with a similar, complementary component so that the resulting plastic connection assembly is applied to either side of a plurality of optical fibers.

Typically, the optical fibers to be supported by the plastic connection assembly are conventional glass, multi-mode fibers having a core in the range of approximately 50-65 microns and an overall diameter of approximately 125 microns. However, they may be single mode fibers having a core in the range of approximately 8-10 microns with an overall diameter of approximately 125 microns, or conventional glass fibers coated with a thin layer of polyimide, giving them a total diameter of 145 microns. Also, some commercial glass fibers have an additional acrylate coating (≅ 125 microns) that is removed prior to mounting the fibers in a V-groove.

Alignment means 16 is shown in FIG. 1 as a pin-like conical feature on one side and a cavity or depression of corresponding shape and size on the other side. However, alignment means 16 also can be other suitable configurations such as an alignment means that insures alignment of the matching V-grooves with the individual optical fibers.

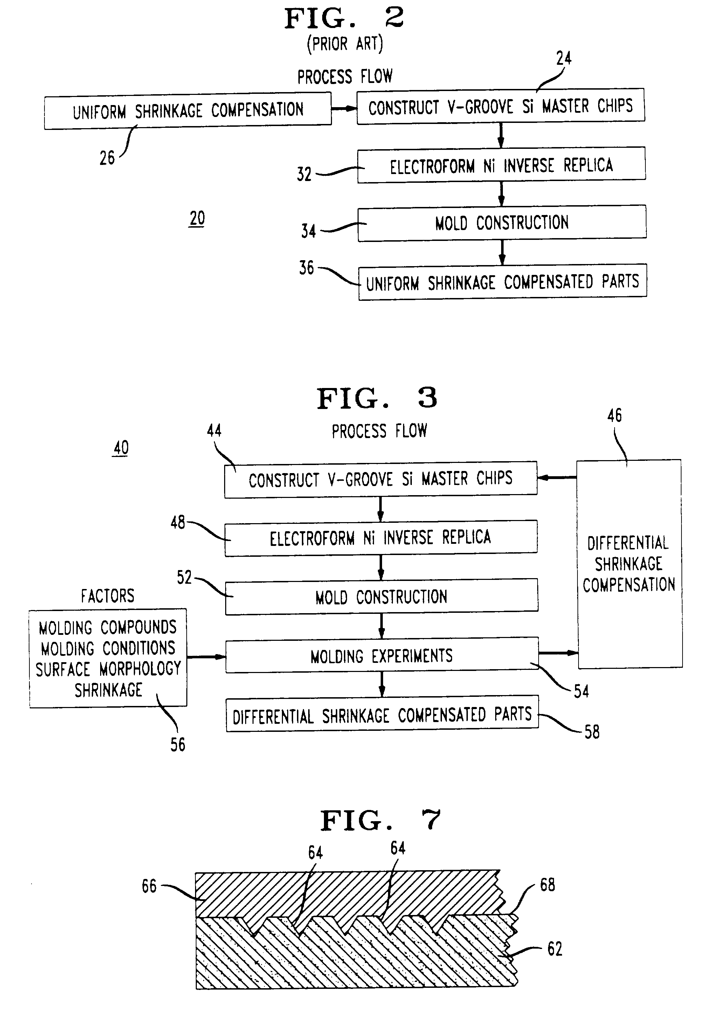

FIG. 2 schematically illustrates a prior art molding technique 20 for manufacturing optical fiber plastic connector parts according to the prior art. In such a technique, the first step 24 involves making one or more features such as V-grooves in what is referred to as a master chip, which is a replica of the desired plastic connectors to be molded. The master chip is constructed from a monocrystalline material such as silicon and the V-grooves are formed therein using conventional photolithographic masking and etching techniques.

The V-grooves are made slightly and uniformly larger than is intended for the V-grooves in the final optical support member as compensation (shown generally as 26) for molding induced shrinkage of the plastic during the subsequent molding process. Molding induced shrinkage is defined herein as the absolute difference between a feature size on the silicon master chip or other mold and the corresponding feature size on molded plastic connector itself. Also, for features such as V-grooves and U-grooves, molding induced shrinkage includes absolute differences in spacing therebetween. The features of interest in this context include (but are not limited to) V-grooves, U-grooves, alignment means and the like.

For example, of the suitable plastic materials known in the art to have relatively low shrinkage, such as polyphenylene sulfide (PPS), polyetherimide and liquid crystal polymers, with appropriate fillers, PPS is believed to have a V-groove shrinkage of approximately 0.4 percent below the dimensions of the V-grooves in the original silicon master chips. Consequently, using prior art techniques, uniform shrinkage compensation 26 involves constructing the dimensions of all V-grooves in the silicon master chip approximately 0.4 percent greater than the final desired dimension of the connector V-grooves.

Once the master chip has been made, the next step 32 involves forming a metal layer, such as a Ni layer, over the master chip V-grooves, such as by conventional electroforming methods. Thereafter, the master chip is removed and the remaining metal layer is then used as an insert in a mold constructed to define the remaining configuration of the support members or the entire connection assembly component (shown as step 34). That is, the support members are made by a conventional molding technique using a mold having the metal layer insert in the portion of the mold defining the V-grooves of the support members being made.

Using the insert formed in step 32 as part of the mold constructed in step 34, plastic support members are fabricated (shown as step 36) using an otherwise conventional molding process. As discussed, the mold insert used to manufacture the parts in step 36 of the prior art technique has been dimensioned slightly and uniformly larger to compensate for shrinkage of the plastic during the actual molding portion of the process.

For applications where alignment tolerances are somewhat loose, e.g., several microns, the technique as described above works well. However, when alignment tolerances are one micron or less, it is desirable to have available an improved technique for production of optical fiber connectors in which compensation for molding induced shrinkage is more accurate.

According to the present invention there is provided an insert as defined in claim 1, or a method as defined in claim 5.

The invention is as defined by the claims and is embodied in an improved molding method for manufacturing optical fiber connectors made of plastic and a mold insert apparatus used in such method. In particular, it is a molding method that compensates differentially rather than uniformly for molding induced shrinkage. Based on experimental determination that shrinkage of features such as V-grooves in molded plastic connectors is non-uniform and is dependent on the connector size and the specific portion of the connector, the magnitude of shrinkage for specific locations on the specific size and type of plastic to be molded into optical fiber connectors is determined. From this determination, a master insert compensating for the differential shrinkage is constructed and used in the subsequent molding processes for mass production of optical fiber connectors that more accurately accommodate fibers to be connected.

### Brief Description of the Drawings

FIG. 1 is a perspective view of a plastic connection assembly component produced by a known molding process and showing a V-groove support member as a portion thereof;
FIG. 2 is a schematic flow chart illustrating a molding process for optical fiber plastic connectors according to the prior art;
FIG. 3 is a schematic flow chart illustrating a molding process for optical fiber plastic connectors according to an embodiment of the invention;
FIG. 4 is a summary table of data including the molding conditions and a qualitative description of the resulting surface morphology;
FIG. 5 is a schematic of the cross-section of representative V-groove portions of an optical fiber plastic connector according to the invention with accompanying data showing generally the edge effect of molding induced shrinkage;
FIG. 6 is a graph showing generally the edge effect component of molding induced shrinkage along the V-groove surface of an optical fiber connector; and
FIG. 7 is a schematic of the cross-section of a portion of the master chip and corresponding master insert according to the invention.

### Detailed Description

Experimentation associated with the invention and described in more detail below has shown that molding induced shrinkage of features is non-uniform for different connector sizes and different areas of the plastic connector. For example, in general, lateral shrinkage (i.e., shrinkage perpendicular to the direction of, e.g., a plurality of the V-grooves) is greater in areas near the edges of the connector. Also, in general, molding induced shrinkage is greater for larger connector sizes. Thus, both the edge effect and size effect components of molding induced shrinkage must be taken into account and compensated for properly.

The invention described herein compensates differentially for the recognized non-uniform shrinkage of molded connector components. FIG. 3 schematically illustrates a molding technique 40 according to an embodiment of the invention. Although the only features discussed in the following description are V-grooves, it should be understood that, as stated previously, the invention pertains to all moldable features that can formed in or operably attached to the connectors.

The initial step 44 in the inventive technique 40 is the construction of one or more V-grooves in at least one master chip. The V-grooves are constructed based on differential shrinkage compensation, shown generally as 46. Initially, to differentially compensate for molding induced shrinkage, the differential shrinkage must first be characterized, i.e., a set of differential shrinkage values first must be created. For purposes of discussion in this description, the term "shrinkage values" represents the data necessary to characterize the specific shrinkage occurring on a plastic connector for a given set of fabrication parameters.

Therefore, to establish differential shrinkage values, an experimental molding process is performed using conventional process parameters and molding conditions similar to those that are used in the actual molding process. Such parameters include specific processing times and temperatures, as well as the specific types of materials used in making the master chips and the connectors.

The experimental molding process used to establish the set of differential shrinkage values duplicates, to a certain extent, the actual molding process of the invention. However, for purposes of explanation, the experimental process will be discussed initially and as a separate process.

The first step 44 involves making one or more V-grooves in a body made of silicon or other monocrystalline material. The V-grooves, which are constructed using conventional masking and etching techniques, are formed so that they are uniformly dimensioned as desired and the spacing between adjacent V-grooves is equidistant.

The next step 48 is to form a metal layer such as a Ni layer over the V-grooves in a manner well known to those skilled in the art, such as by using electroforming techniques. Step 48 is complete once the metal layer has been formed and the V-grooved monocrystalline body is removed from the metal layer, thus leaving an experimental mold insert with a surface having an inverse replica of the uniformly spaced and dimensioned V-grooves from the monocrystalline body.

The next step 52 is to construct a mold for use in fabricating the optical plastic connectors of interest. That is, the mold is constructed to define the configuration of the desired plastic connectors except for the V-groove portion thereof, which is defined by an insert. In this experimental portion of the invention, the experimental insert is positioned within the mold and used as the mold portion.

The next step 54 in this sequence is to conduct molding experiments by fabricating experimental plastic connectors using the experimental insert as the mold portion. As mentioned previously, and as will be discussed in greater detail below, the experimental plastic connectors are fabricated to assist in determining a set of differential shrinkage values for use in compensating for the differential molding induced shrinkage of the actual plastic connectors. For example, dimension and spacing differences between the V-grooves of the experimental insert and the V-grooves of the resulting experimental plastic connectors give an indication as to the molding induced shrinkage of the experimental connectors.

However, in addition to the actual measured shrinkage values, the molding experiments were conducted to evaluate factors such as the dependence of shrinkage values on the molding conditions, the correlation of shrinkage values with the resulting surface morphology, and reproducibility of critical features such as V-grooves in connectors molded under identical conditions during a run and also at different times. Such factors are shown generally as 56. Experimental results as they pertain to these factors will be discussed in greater detail below.

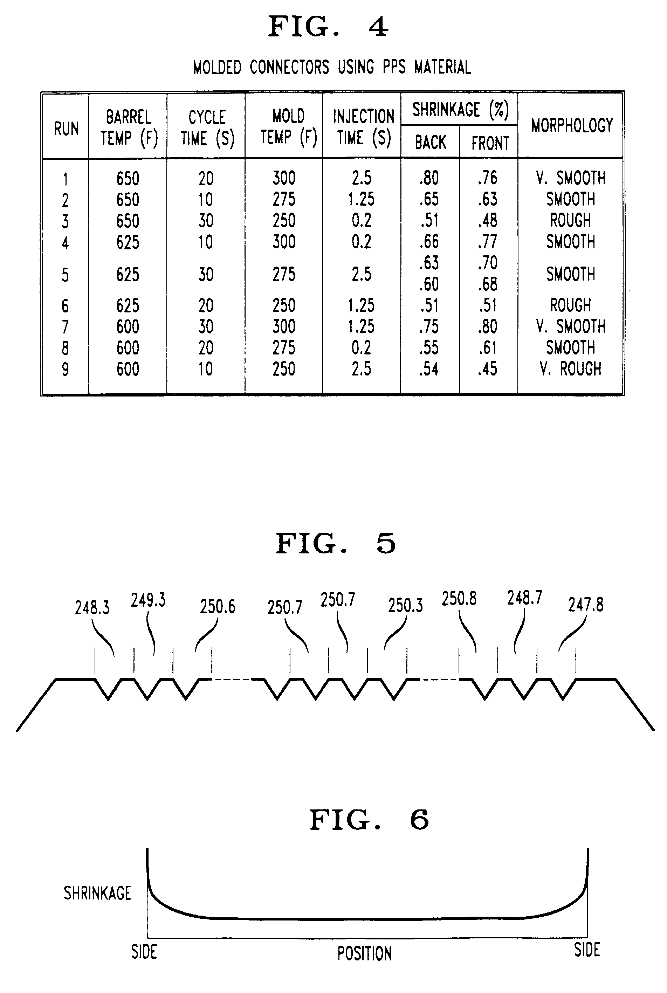

FIG. 4 shows a representative portion of experimental data referred to generally in the above discussion. More specifically, a summary of the results for a representative series of experimental runs is set forth in FIG. 4, along with the molding conditions and a qualitative description of the resulting surface morphology. Surface morphology is the magnitude of surface irregularities that are due mostly to the small voids and protrusions caused by incomplete resin fill, usually around the filler particles, during molding of the particular compound.

In FIG. 4, the Barrel Temperature, Cycle Time, Mold Temperature and Injection Time headings all represent molding process parameters known to those skilled in the art of injection molding. The Shrinkage (Back and Front) heading represents the average shrinkage of the V-groove dimensions from one edge to the other in the front and back regions of the plastic molded connectors during this experimentation. The front region is generally where the polished fiber ends would be located eventually, and the back or rear region is where the fibers would enter the V-grooves.

The surface quality of the samples was studied by optical microscopy and scanning electron microscope (SEM). Qualitative observations of surface morphology are classified in varying degrees of smoothness and roughness, with smoothness being desirable. In terms of these observations, experimentation conducted as part of the invention demonstrates that, in general, an increase in surface smoothness corresponds to an increase in the value of molding induced shrinkage. However, this shrinkage was found to be shrinkage that can be compensated for more accurately according to the techniques of the invention.

Furthermore, connectors with good surface morphology can be molded using a variety of conditions, as identified in FIG. 4. In general, a shrinkage value of approximately 0.6 or greater produces connectors having desirable feature definition and surface smoothness. Also, as shown in FIG. 4, this general relationship between surface morphology and corresponding shrinkage holds even within the V-groove section of a connector where a smooth surface on one end of the connector changes to a relatively rough surface at the opposing end. One way to reduce this longitudinal differential shrinkage is to keep the length of the V-grooves relatively short, e.g., 2 mm instead of the conventional 6 mm.

FIGs. 5-6 illustrate some final representative experimentation demonstrating the differential nature of molding induced shrinkage in the lateral direction in terms of its edge effect component. FIG. 5 shows various V-groove spacings along a typical plastic connector that was molded using an insert having uniform V-groove spacings of approximately 251.8 µm. The spacings were dimensioned to be approximately 0.7% larger than the final desired spacing dimension of 250 µm for the molded plastic connectors.

As can be seen from this data, the resulting spacings of the outer V-grooves are generally narrower on both sides of the connector compared with the inner V-groove spacings. In general, this edge effect is shown graphically in FIG. 6. However, it should be noted that even the edge effect shown here is not uniform, as even the innermost V-grooves suffered varying degrees of shrinkage. Therefore, differential compensation must be performed across the entire connector. That is, it would be insufficient to compensate for shrinkage simply by determining the overall length between the outermost edges of the V-grooves and dividing by the number of V-grooves.

Referring again to FIG. 3, based on molding experiments 54 and with regard to factors 56, differential shrinkage compensation 46 in the form of shrinkage values is determined and, in turn, applied to the construction of an actual V-groove master chip (step 44).

Therefore, returning again to step 44, a master chip 62 (see FIG. 7) is constructed from a monocrystalline body such as silicon. However, unlike experimental fabrication of V-grooves in a monocrystalline body, in the actual construction of master chip 62, the V-grooves 64 formed therein are dimensioned and spaced with respect to one another differentially based on the set of differential shrinkage values established as part of differential shrinkage compensation 46. That is, the size and separation of the V-grooves are made differentially larger to compensate for the subsequent non-uniform shrinkage.

Once master chip 62 is formed in step 44, a metal layer is formed over the master chip 62, as per step 48, thereby forming a master insert 66. Although electroforming has been described for depositing a metal layer, other deposition methods such as vapor deposition could be used instead.

Step 48 continues with the removal of master chip 62 from master insert 66. Because master chip 62 is typically a body of silicon, its removal may equate to destruction thereof, e.g., by etching it in a mixture of HF, HNO₃ and water, a solution of KOH in H₂O, or other known etchants of silicon. The resulting master insert 66 has a surface 68 with an inverse replica of the differentially sized and spaced V-grooves originally formed in master chip 62.

As per step 52, master insert 66 is used as a molding portion for an existing or newly constructed mold. Techniques for making an appropriate mold for connection assembly fabrication are known to workers in the art. Also, the use of a mold insert to define certain portions of a molded part is well-known.

Finally, as shown by step 58 in FIG. 3, the use of master insert 66 in conventional molding techniques as discussed above yields plastic components for optical fiber connection assemblies in which the plastic components have been compensated for differentially via master insert 66. The resulting V-grooves are more consistent with respect to one another and in comparison with final desired dimensions, thus contributing to alignment accuracy of optical fibers positioned within the resulting connection assemblies.

It will be understood that the novel fabrication techniques described herein can be used with any precision molding techniques known in the art for fabricating optical fiber plastic interconnection assemblies. Such molding techniques include transfer molding and injection molding processes.

Additionally, specific applications of the invention include, but in no way are limited to mass production of split multi-fiber optical connectors (MOCs) used in the assignee's assembly processes for producing connectorized optical interconnection circuits (COICs), and mass production of optical interconnection packages compatible with commercial MOCs for fiber-to-fiber and connector-to-connector alignment.

## Claims

1. A master insert (66) for use as a mold portion in molding optical fiber connectors, the optical fiber connectors having one or more features formed therein, said master insert having:
a surface corresponding inversely to said optical fiber connector; and
one or more inverse features (e.g., 64) formed on said surface,
characterized in that
said inverse features are dimensioned to compensate for differential shrinkage of said optical fiber connectors during molding.

2. The master insert as recited in claim 1, wherein said inverse features are dimensioned differentially larger than said corresponding connector features and wherein the spacing between adjacent inverse features is differentially larger than the spacing between said corresponding connector features.

3. The master insert as recited in claim 1, wherein said inverse features are dimensioned based on a predetermined set of shrinkage values characteristic of the shrinkage of said optical fiber connectors during molding.

4. The master insert as recited in claim 1, wherein said surface is defined by an edge, wherein said inverse features include a first group of inverse features formed near said edge and a second group, wherein said first group of inverse features is dimensioned larger than said second group of inverse features and wherein the spacing between adjacent inverse features in said first group of inverse features is larger than the spacing between adjacent inverse features in said second group of inverse features.

5. A method for molding optical fiber connectors, said method comprising the steps of:
providing a master chip (44) having formed therein a plurality of features corresponding to features of the optical fiber connectors to be molded, the master chip being a replica of the optical fiber connector to be molded;
providing a master insert (44) having a surface with an inverse replica of the master chip; and
molding (54) said optical fiber connectors using said master insert as a mold portion,
characterized in that
the master chip providing step further includes dimensioning (58) the features formed in the master chip to compensate for differential shrinkage of said optical fiber connectors during molding.

6. The method as recited in claim 5, further comprising the step of configuring one or more features in said master chip based on a set of differential shrinkage values that characterize said optical fiber connectors, said configuring step including one or more of the group of steps consisting of configuring the size of at least one groove formed therein, configuring the separation between adjacent grooves formed therein, differentially enlarging the size of at least one groove formed therein and differentially enlarging the spacings between adjacent grooves formed therein.

7. The method as recited in claim 5, wherein said molding step further comprises molding said optical fiber connectors having an overall length of no more than approximately 2.0 mm.

## Patentansprüche

1. Standardeinlage (66) zur Verwendung als Formteil beim Formen von Lichtleitfaserverbindern, wobei in den Lichtleitfaserverbindern ein oder mehrere Strukturelemente ausgebildet sind, wobei die Standardeinlage folgendes aufweist:
eine Oberfläche, die umgekehrt dem Lichtleitfaserverbinder entspricht; und
ein oder mehrere umgekehrte Strukturelemente (z.B. 64), die auf der Oberfläche ausgebildet sind,
dadurch gekennzeichnet, daß
die umgekehrten Strukturelemente so bemessen sind, daß sie Schrumpfdifferenzen der Lichtleitfaserverbinder während des Formens ausgleichen.

2. Standardeinlage nach Anspruch 1, wobei die umgekehrten Strukturelemente um eine Differenz größer als die entsprechenden Verbinderstrukturelemente bemessen sind und wobei der Abstand zwischen benachbarten umgekehrten Strukturelementen um eine Differenz größer als der Abstand zwischen den entsprechenden Verbinderstrukturelementen ist.

3. Standardeinlage nach Anspruch 1, wobei die umgekehrten Strukturelemente auf der Grundlage einer vorbestimmten Menge von Schrumpfwerten bemessen sind, die für das Schrumpfen der Lichtleitfaserverbinder während des Formens charakteristisch sind.

4. Standardeinlage nach Anspruch 1, wobei die Oberfläche durch einen Rand definiert wird, wobei die umgekehrten Strukturelemente eine erste Gruppe von in der Nähe des Rands ausgebildeten umgekehrten Strukturelementen und eine zweite Gruppe umfassen, wobei die erste Gruppe von umgekehrten Strukturelementen größer als die zweite Gruppe von umgekehrten Strukturelementen bemessen ist und wobei der Abstand zwischen benachbarten umgekehrten Strukturelementen in der ersten Gruppe von umgekehrten Strukturelementen größer als der Abstand zwischen benachbarten umgekehrten Strukturelementen in der zweiten Gruppe von umgekehrten Strukturelementen ist.

5. Verfahren zum Formen von Lichtleitfaserverbindern mit den folgenden Schritten:
Bereitstellen eines Standardchips (44), in dem mehrere Strukturelemente ausgebildet sind, die Strukturelementen der zu formenden Lichtleitfaserverbinder entsprechen, wobei der Standardchip eine Nachbildung des zu formenden Lichtleitfaserverbinders ist;
Bereitstellen einer Standardeinlage (44), die eine Oberfläche mit einer umgekehrten Nachbildung des Standardchips aufweist; und
Formen (54) der Lichtleitfaserverbinder unter Verwendung der Standardeinlage als ein Formteil,
dadurch gekennzeichnet, daß
der Schritt des Bereitstellens des Standardchips weiterhin das Bemessen (58) der in dem Standardchip ausgebildeten Strukturelemente, so daß Schrumpfdifferenzen der Lichtleitfaserverbinder während des Formens ausgeglichen werden, umfaßt.

6. Verfahren nach Anspruch 5, weiterhin mit dem Schritt des Konfigurierens eines oder mehrerer Strukturelemente in dem Standardchip auf der Grundlage einer Menge von Schrumpfdifferenzwerten, die die Lichtleitfaserverbinder charakterisieren, wobei der Schritt des Konfigurierens einen oder mehrere Schritte aus der Gruppe bestehend aus: Konfigurieren der Größe mindestens einer darin ausgebildeten Rille, Konfigurieren des Trennungsabstands zwischen darin ausgebildeten benachbarten Rillen, Vergrößern mindestens einer darin ausgebildeten Rille um eine Differenz und Vergrößern der Abstände zwischen darin ausgebildeten benachbarten Rillen um eine Differenz umfaßt.

7. Verfahren nach Anspruch 5, wobei der Schritt des Formens weiterhin das Formen der Lichtleitfaserverbinder mit einer Gesamtlänge von höchstens ungefähr 2,0 mm umfaßt.

## Revendications

1. Insert maître (66) destiné à être utilisé comme portion de moule dans le moulage de connecteurs pour fibres optiques dans lesquels sont formés un ou plusieurs détails, ledit insert maître présentant :
une surface correspondant inversement audit connecteur pour fibres optiques ; et
un ou plusieurs détails inverses (par ex. 64) formés sur ladite surface,
caractérisé en ce que
lesdits détails inverses sont dimensionnés de manière à compenser le retrait différentiel desdits connecteurs pour fibres optiques au cours du moulage.

2. Insert maître selon la revendication 1, dans lequel lesdits détails inverses sont dimensionnés différentiellement plus grands que lesdits détails correspondants des connecteurs, et dans lequel l'espacement entre des détails inverses adjacents est différentiellement plus grand que l'espacement entre lesdits détails correspondants des connecteurs.

3. Insert maître selon la revendication 1, dans lequel lesdits détails inverses sont dimensionnés en fonction d'un ensemble prédéterminé de valeurs de retrait caractéristiques du retrait desdits connecteurs pour fibres optiques au cours du moulage.

4. Insert maître selon la revendication 1, dans lequel ladite surface est définie par un bord, dans lequel lesdits détails inverses comportent un premier groupe de détails inverses formés près dudit bord et un deuxième groupe, dans lequel ledit premier groupe de détails inverses sont dimensionnés plus grands que ledit deuxième groupe de détails inverses et dans lequel l'espacement entre des détails inverses adjacents dans ledit premier groupe de détails inverses est plus grand que l'espacement entre des détails inverses adjacents dans ledit deuxième groupe de détails inverses.

5. Procédé de moulage de connecteurs pour fibres optiques, ledit procédé comprenant les étapes de :
procuration d'une puce maîtresse (44) dans laquelle sont formés une pluralité de détails correspondant à des détails de connecteurs pour fibres optiques à mouler, la puce maîtresse étant une réplique du connecteur pour fibres optiques à mouler ;
procuration d'un insert maître (44) présentant une surface dotée d'une réplique inverse de la puce maîtresse ; et
moulage (54) desdits connecteurs pour fibres optiques en utilisant ledit insert maître comme portion de moule ;
caractérisé en ce que
l'étape de procuration d'une puce maîtresse comporte en outre le dimensionnement (58) des détails formés dans la puce maîtresse afin de compenser le retrait différentiel desdits connecteurs pour fibres optiques au cours du moulage.

6. Procédé selon la revendication 5, comprenant en outre l'étape de configuration d'un ou de plusieurs détails dans ladite puce maîtresse en fonction d'un ensemble de valeurs de retrait différentiel qui caractérisent lesdits connecteurs pour fibres optiques, ladite étape de configuration comportant une ou plusieurs étapes parmi un groupe d'étapes comprenant la configuration de la taille d'au moins une rainure qui y est formée, la configuration de la séparation entre des rainures adjacentes qui y sont formées, l'agrandissement différentiel de la taille d'au moins une rainure qui y est formée et l'agrandissement différentiel des espacements entre des rainures adjacentes qui y sont formées.

7. Procédé selon la revendication 5, dans lequel ladite étape de moulage comprend en outre le moulage desdits connecteurs pour fibres optiques dont la longueur hors tout ne dépasse pas approximativement 2,0 mm.
